# EUROPÄISCHE PATENTSCHRIFT

(11) **EP 4 366 156 B1**
(45) Veröffentlichungstag und Bekanntmachung des Hinweises auf die Patenterteilung: **04.06.2025**
(21) Anmeldenummer: 23203308.4
(22) Anmeldetag: 12.10.2023
(51) Int. Cl.: H02P 29/00, G05B 19/042, H04L 27/26

(54) **ANTRIEBSSYSTEM UND VERFAHREN ZU DESSEN BETRIEB**
DRIVE SYSTEM AND METHOD FOR OPERATING SAME
SYSTÈME D'ENTRAÎNEMENT ET SON PROCÉDÉ DE FONCTIONNEMENT

(30) Priorität: 07.11.2022 DE 102022129341
(43) Veröffentlichungstag der Anmeldung: 08.05.2024
(73) Patentinhaber: SICK AG, 79183 Waldkirch (DE)
(72) Erfinder: Suess, Sebastian, 78176 Blumberg (DE)
(74) Vertreter: Manitz Finsterwald Patent- und Rechtsanwaltspartnerschaft mbB

(56) Entgegenhaltungen:
- EP-A1- 4 044 560
- US-A1- 2021 311 458
- US-A1- 2022 103 449
- US-B2- 10 040 193

## Beschreibung

Die Erfindung betrifft ein Antriebssystem mit einer Motoreinheit, einer mit der Motoreinheit verbundenen Motorsteuerung und zumindest einem Peripheriegerät.

Bei mechatronischen Antriebssystemen ist es heute bereits üblich, neben Motordaten, die zu der primären Funktionalität der Antriebssysteme gehörig sind, so genannte Zusatzdaten zu erfassen, die beispielsweise von einem oder mehreren Peripheriegeräten erzeugt werden, die mit dem jeweiligen Antriebssystem verbunden sind. Solche Zusatzdaten sind beispielsweise Schwingungsdaten, die von einem internen oder externen Schwingungssensor bereitgestellt werden.

Bei bestehenden Antriebssystemen erfolgt die Übertragung von Daten jedoch meistens nur in eine Richtung, und zwar von dem jeweiligen Peripheriegerät zu einer Datenerfassungseinheit des jeweiligen Antriebssystems. Die Datenerfassungseinheit erfasst somit meistens nur die Zusatzdaten und wertet diese aus, ohne Daten zum jeweiligen Peripheriegerät zu übertragen. Daher sind die Peripheriegeräte, die üblicherweise an Antriebssysteme angeschlossen werden können, meist sehr einfach aufgebaut. Die Einbindung eines komplexeren Peripheriegeräts, das beispielsweise eine Kommunikation mit der Datenerfassungseinheit bzw. einer Motorsteuerung mit einer Übertragung von Daten von der Datenerfassungseinheit zum Peripheriegerät erfordert, ist meistens nicht vorgesehen oder nur mit erhöhtem Aufwand realisierbar.

Aus der US 2022/0103449 A1 sind ein Antriebsystem und ein Verfahren mit den Merkmalen gemäß dem jeweiligen Oberbegriff der Ansprüche 1 bzw. 11 beschrieben.

Die EP 4 044 560 A1 beschreibt ein Antriebssystem mit Merkmalen gemäß einer verwandten Technologie.

In der US 2021/0311458 A1 ist ebenfalls ein Antriebssystem mit Merkmalen gemäß einer verwandten Technologie beschrieben.

Eine Aufgabe der Erfindung besteht darin, ein Antriebssystem zu schaffen, das eine flexible und effiziente Einbindung eines Peripheriegeräts gestattet.

Diese Aufgabe wird durch ein Antriebssystem und ein Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Das Antriebssystem umfasst eine Motoreinheit, die eine Datenerfassungseinheit aufweist, eine Motorsteuerung, die über ein Motorkabel mit der Motoreinheit verbunden ist, und zumindest ein Peripheriegerät. Die Datenerfassungseinheit ist einerseits ausgebildet, primäre Daten von einer oder mehreren Komponenten der Motoreinheit und sekundäre Daten von dem Peripheriegerät zu empfangen, die primären Daten mit den sekundären Daten zu fusionieren und die fusionierten Daten über das Motorkabel zu der Motorsteuerung zu übertragen. Darüber hinaus ist die Datenerfassungseinheit ausgebildet, Steuerungs- und Konfigurationsdaten von der Motorsteuerung über das Motorkabel zu empfangen und die Steuerungs- und Konfigurationsdaten selektiv an die eine oder die mehreren Komponenten der Motoreinheit und/oder an das Peripheriegerät zu übertragen.

Die Motoreinheit und die Motorsteuerung können gemeinsam den "normalen" Betrieb des Antriebssystems ermöglichen, d.h. die primäre Bewegungsfunktionalität des Antriebssystems. Die Motoreinheit ist beispielsweise ein Servomotor. In diesem Fall werden solche Motordaten an die Motorsteuerung übertragen, die z.B. eine Drehposition und/oder eine Drehgeschwindigkeit des Servomotors umfassen.

Da die Datenerfassungseinheit nicht nur zum Empfangen, Verarbeiten und Weiterleiten der primären und sekundären Daten von der Motoreinheit und dem Peripheriegerät vorgesehen ist, sondern auch die Steuerungs- und Konfigurationsdaten von der Motorsteuerung empfängt und weiterleitet, weist die Datenerfassungseinheit eine bidirektionale Funktionalität auf, im Gegensatz zur unidirektionalen Funktionalität bekannter Erfassungseinheiten, bei denen lediglich erfasste Messdaten der Motoreinheit und des Peripheriegeräts an die Motorsteuerung übertragen werden. Zusätzlich zu dieser Erfassung und Übertragung der primären und sekundären Daten überträgt die Datenerfassungseinheit die Steuerungs- und Konfigurationsdaten von der Motorsteuerung an die Motoreinheit und das Peripheriegerät, sodass eine bidirektionale Kommunikation einerseits zwischen der Datenerfassungseinheit und der Motoreinheit sowie dem Peripheriegerät und andererseits zwischen der Datenerfassungseinheit und der Motorsteuerung geschaffen wird.

Durch diese bidirektionale Kommunikation und die Übertragung von Steuerungs- und Konfigurationsdaten ist es möglich, komplexe Peripheriegeräte in das Antriebssystem zu integrieren, die eine solche Übertragung von Steuerungs- und Konfigurationsdaten erfordern. Da notwendige Konfigurationsdaten mittels der Datenerfassungseinheit übertragen werden können, können nahezu beliebige Peripheriegeräte an die Datenerfassungseinheit angeschlossen und in das Antriebssystem integriert werden, sofern das Peripheriegerät ein gängiges Datenprotokoll verwendet, das für die Datenerfassungseinheit geeignet ist. Folglich können verschiedenartige Peripheriegeräte auf flexible Weise in das Antriebssystem integriert werden.

Das Fusionieren der primären Daten und der sekundären Daten kann umfassen, dass diese zusammen beispielsweise in gemeinsamen oder aufeinanderfolgenden Datenpaketen über eine HDSL-Leitung übertragen werden. Der Begriff HDSL steht im vorliegenden Zusammenhang für "HIPERFACE DSL", und die HDSL-Leitung bezeichnet insbesondere eine DSL-artige Leitung des HIPERFACE-Systems der Sick AG. Die HDSL-Leitung ist also ein Eigenname, der auf einer DSL-ähnlichen Übertragungstechnik mit einer Vielzahl von Trägerfrequenzen beruht. Eine DSL-Leitung (digital subscriber line) ist beispielsweise ebenso ausgebildet, Daten unter Verwendung einer Vielzahl von Trägerfrequenzen zu übertragen.

Die Motorsteuerung kann eine Anbindung an ein Netzwerk aufweisen, insbesondere eine Feldbusanbindung wie EtherCAT, EIP und dergleichen. Diese Anbindung gestattet die Übertragung bzw. Ausgabe der sekundären Daten des Peripheriegeräts an das Netzwerk und umgekehrt die Übertragung von Daten aus dem Netzwerk an das Peripheriegerät.

Auf diese Weise ist ein zusätzlicher bzw. separater Anschluss des Peripheriegeräts an ein Bus-System, mit dem auch die Motorsteuerung verbunden ist, und dessen Konfiguration nicht erforderlich. Stattdessen kann die hierin beschriebene Übertragung der sekundären Daten auch so erfolgen, dass für andere Teilnehmer des Netzwerks bzw. des Feldbusses das Peripheriegerät so erscheint, als wäre es direkter Teil des Netzwerks bzw. des Feldbusses.

Das Antriebssystem umfasst erfindungsgemäß zumindest zwei Peripheriegeräte, und die Datenerfassungseinheit ist ausgebildet, sekundäre Daten zwischen den zumindest zwei Peripheriegeräten zu übertragen. Die bidirektionale Kommunikation der Datenerfassungseinheit umfasst somit nicht nur die Kommunikation zwischen dieser und einem einzelnen Peripheriegerät, sondern auch eine bidirektionale Kommunikation zwischen zumindest zwei Peripheriegeräten. Dies kann die flexible Einbindung von solchen Peripheriegeräten in das Antriebssystem ermöglichen, bei denen eine vordefinierte Abhängigkeit voneinander bezüglich bestimmter Funktionalitäten besteht und eine Kommunikation zwischen den zumindest zwei Peripheriegeräten erfordert.

Beispielsweise kann die Datenerfassungseinheit ausgebildet sein, die sekundären Daten der zumindest zwei Peripheriegeräte basierend aufeinander oder zur gleichen Zeit zu erfassen. Die aufeinander basierenden sekundären Daten können beispielsweise eine zeitliche Reihenfolge für das Bereitstellen der Daten erfordern. Ebenso kann es notwendig sein, dass die sekundären Daten zweier Peripheriegeräte zur gleichen Zeit erfasst werden, um bestimmte Funktionalitäten der beiden Peripheriegeräte zu ermöglichen. Darüber hinaus kann es auch möglich sein, dass zunächst eine Interaktion zumindest zweier Peripheriegeräte erfolgen sollte, bevor ein drittes Peripheriegerät eine vorbestimmte Aktion oder eine Datenaufnahme durchführt. Da die Datenerfassungseinheit somit ausgebildet sein kann, eine Wechselwirkung basierend auf einem Datenaustausch zwischen zwei und mehr Peripheriegeräten zu organisieren, können folglich Peripheriegeräte in das Antriebssystem eingebunden werden, die einzeln oder im Zusammenwirken komplexe Funktionalitäten bereitstellen.

Gemäß einer Ausführungsform kann die Datenerfassungseinheit ausgebildet sein, die Steuerungs- und Konfigurationsdaten zu verwenden, um eine Konfiguration der Motoreinheit und/oder des Peripheriegeräts durchzuführen. Die Datenerfassungseinheit kann folglich nicht nur zur Übertragung der Steuerungs- und Konfigurationsdaten vorgesehen sein, sondern selbst eine aktive Rolle bei der Kommunikation mit der Motoreinheit und/oder dem Peripheriegerät übernehmen, um diese zu konfigurieren. Mit anderen Worten kann ein Teil der Steuerungs- und Konfigurationsfunktionalität der Motorsteuerung in die Datenerfassungseinheit verlagert sein.

Die Datenerfassungseinheit kann ferner ausgebildet sein, ein Signal zur Abfrage spezifischer Daten an das Peripheriegerät zu senden, die abgefragten spezifischen Daten zu empfangen und diese für eine Übertragung an die Motorsteuerung zu verarbeiten. Das Signal zur Abfrage spezifischer Daten kann die Datenerfassungseinheit beispielsweise zuvor von der Motorsteuerung empfangen. Somit kann das Peripheriegerät durch die Möglichkeit zur Abfrage spezifischer Daten gezielt in die Steuerung bestimmter Funktionen des Antriebssystems eingebunden werden. Dies kann verbesserte oder erweiterte Steuerungsfunktionen für das Antriebssystem ermöglichen.

Gemäß einer weiteren Ausführungsform kann die Datenerfassungseinheit ein Motordatenerfassungsmodul, ein Zusatzdatenerfassungsmodul und ein Signalaufbereitungsmodul umfassen. Das Motordatenerfassungsmodul kann ausgebildet sein, die primären Daten an einer Primärdatenschnittstelle zu empfangen, für das Signalaufbereitungsmodul umzusetzen und über eine Motordatenschnittstelle an das Signalaufbereitungsmodul zu übertragen. Auf ähnliche Weise kann das Zusatzdatenerfassungsmodul ausgebildet sein, die sekundären Daten an einer Sekundärdatenschnittstelle zu empfangen, für das Signalaufbereitungsmodul umzusetzen und über eine Zusatzdatenschnittstelle an das Signalaufbereitungsmodul zu übertragen.

Die primären und die sekundären Daten können bei dieser Ausführungsform folglich zunächst in separaten Modulen erfasst und in ein Datenformat umgesetzt werden, das für das Signalaufbereitungsmodul geeignet ist. Wenn beispielsweise ein bestehendes Peripheriegerät durch ein anderes Peripheriegerät ersetzt werden soll, das ein anderes Datenformat verwendet als das vorhergehende Peripheriegerät, kann lediglich eine erneute Konfiguration des Zusatzdatenerfassungsmoduls erforderlich sein, um das andere Peripheriegerät in das Antriebssystem einzubinden. Der Austausch von Peripheriegeräten kann folglich durch den modularen Aufbau der Datenerfassungseinheit unterstützt werden. Darüber hinaus können das Motordatenerfassungsmodul und das Zusatzdatenerfassungsmodul zusätzlich ausgebildet sein, jeweilige Steuerungs- und Konfigurationsdaten, die von der Motorsteuerung stammen und von dem Signalaufbereitungsmodul selektiv verarbeitet und weitergegeben werden, auf geeignete Weise an die eine oder die mehreren Komponenten der Motoreinheit bzw. an das Peripheriegerät zu übertragen.

Das Motordatenerfassungsmodul und das Zusatzdatenerfassungsmodul können als ein gemeinsames Erfassungsmodul ausgebildet sein. In einem solchen Fall kann das gemeinsame Erfassungsmodul auch als Sensorhub bezeichnet werden. Das gemeinsame Erfassungsmodul kann die Struktur der Datenerfassungseinheit vereinfachen.

Alternativ können das Motordatenerfassungsmodul und das Zusatzdatenerfassungsmodul jeweils als separate Einheiten ausgebildet sein. In diesem Fall können das Motordatenerfassungsmodul und das Zusatzdatenerfassungsmodul sogar separate Geräte sein, die sich physikalisch außerhalb des Signalaufbereitungsmoduls befinden. Die Ausbildung des Motordaten- und des Zusatzdatenerfassungsmoduls als separate Einheiten bzw. Geräte kann bei der Wartung und dem Austausch dieser Module vorteilhaft sein. Dadurch kann auch der Austausch des Peripheriegeräts erleichtert werden.

Das Signalaufbereitungsmodul kann ausgebildet sein, die umgesetzten primären Daten und die umgesetzten sekundären Daten an einer jeweiligen Eingangsschnittstelle zu empfangen, die umgesetzten primären Daten und die umgesetzten sekundären Daten miteinander zu fusionieren und die fusionierten Daten über eine HDSL-Leitung, die in das Motorkabel eingebunden ist, an die Motorsteuerung zu senden. Im Signalaufbereitungsmodul erfolgt somit die Fusion der primären und sekundären Daten, sodass diese über die HDSL-Leitung übertragen und von der Motorsteuerung empfangen werden können.

Ferner kann die HDSL-Leitung mindestens zwei Leitungen umfassen, die zusammen mit Leistungsversorgungsleitungen für die Motoreinheit in dem Motorkabel angeordnet sind. Die Motoreinheit kann folglich mittels eines einzigen Kabels mit der Motorsteuerung verbunden sein ("Ein-Kabel-Anschluss"), welches sowohl die Leistungsversorgung für die Motoreinheit als auch die Datenübertragung mittels HDSL bereitstellt. Die Motoreinheit und die Motorsteuerung können folglich mit geringem Aufwand aneinander angeschlossen werden.

Das Signalaufbereitungsmodul kann ferner ausgebildet sein, über die HDSL-Leitung Daten unter Verwendung einer Vielzahl von Trägerfrequenzen an die Motorsteuerung zu übertragen. Bei dieser Datenübertragung können die fusionierten primären und sekundären Daten unter Verwendung eines orthogonalen Frequenzmultiplexverfahrens (OFDM) in der Vielzahl von Trägerfrequenzen codiert werden, um ein Datensignal zur Übertragung zu erhalten. Die spektrale Belegung dieses Datensignals kann auf den Frequenzbereich zwischen ungefähr 10 MHz und ungefähr 30 MHz beschränkt sein. Bei einer Obergrenze von 30 MHz kann die Verwendung teurer Komponenten und kritischer bzw. anfälliger Verarbeitungen vermieden werden, während gleichzeitig dennoch eine gute Übertragungsqualität der Leitungen erreicht wird. Eine Untergrenze von 10 MHz gestattet die Verwendung physikalischer Komponenten mit einem Hochpassverhalten, die eine Rauschunterdrückung bewirken. Die entsprechende Leitung kann in diesem Fall gleichzeitig zur Zuführung von Gleichstrom verwendet werden, beispielsweise zur Stromversorgung des Sensors.

Die Motorsteuerung kann ferner eine Empfangsschnittstelle aufweisen und ausgebildet sein, die Motordaten und die Zusatzdaten aus den an der Empfangsschnittstelle empfangenen fusionierten Daten zu extrahieren. Die Daten, die mittels der HDSL-Leitung an die Motorsteuerung übertragen werden, können zu diesem Zweck Informationen enthalten, wie die Motordaten und die Zusatzdaten aus den fusionierten Daten zu extrahieren sind. Die Motorsteuerung kann folglich insgesamt eine bidirektionale Kommunikation mit der Motoreinheit und dem Peripheriegerät durchführen, bei welcher die Motorsteuerung geeignet auf die extrahierten Motordaten und Zusatzdaten reagieren und wiederum passende Steuerungs- und Konfigurationsdaten an die Motoreinheit und/oder das Peripheriegerät senden kann.

Bei dem Peripheriegerät kann es sich insbesondere um einen Getriebesensor handeln, wie hierin beschrieben. Weiterhin kann es sich bei dem Peripheriegerät um einen IO-Link-Sensor, welcher beispielsweise gemäß SDCI ("Single-drop digital communication interface for small sensors and actuators") ausgebildet ist, oder einen weiteren Drehgeber handeln. Das Peripheriegerät kann allgemein auch ein Aktor sein, beispielsweise für einen Roboterarm. Ebenso kann das Peripheriegerät ein Kommunikations-Master sein, z.B. ein IO-Link-Master, ein Feldbus-Master und dergleichen.

Es besteht auch die Möglichkeit, dass mehrere Peripheriegeräte so angesteuert werden, dass eine Datenerfassung durch die Peripheriegeräte in Abhängigkeit von den zuvor erfassten Daten erfolgt oder dass die Datenerfassung zeitlich synchronisiert ist.

Gemäß einer weiteren Ausführungsform kann das Peripheriegerät in die Datenerfassungseinheit integriert sein. Konkret kann ein solches Peripheriegerät auf einem einzelnen Mikrochip in der Datenerfassungseinheit realisiert sein. Dadurch können Funktionalitäten von Peripheriegeräten mit geringem Raumbedarf installiert werden.

Gemäß einer alternativen Ausführungsform kann die Motoreinheit einen Servomotor mit einem Encoder umfassen, und die primären Daten können eine Drehposition und/oder eine Drehgeschwindigkeit des Servomotors umfassen, während das Peripheriegerät ein Getriebesensor sein kann und die sekundären Daten getriebespezifische Daten umfassen können. Das Antriebssystem kann ferner neben der Motoreinheit eine Getriebeeinheit umfassen, die mit der Motoreinheit gekoppelt ist.

Das Signalaufbereitungsmodul kann darüber hinaus in den Encoder eingebunden sein, und von dem Encoder erfasste Daten können die primären Daten umfassen. In dem Encoder kann somit die Fusion der primären und sekundären Daten und deren Umsetzung, beispielsweise gemäß dem HDSL-Protokoll, durchgeführt werden, damit die fusionierten Daten über die HDSL-Leitung an die Motorsteuerung übertragen werden können.

Zusätzlich kann der Encoder auch die Umsetzung der Steuerungs- und Konfigurationsdaten der Motorsteuerung von dem HDSL-Protokoll beispielsweise auf das UART-Protokoll (UART von engl.: universal asynchroneous receiver transmitter) durchführen, das für das Motordaten- und das Zusatzdatenerfassungsmodul geeignet ist. Diese Module können die Steuerungs- und Konfigurationsdaten wiederum in ein geeignetes Datenformat für die Komponenten der Motoreinheit bzw. des Servomotors sowie für das jeweilige Peripheriegerät umsetzen.

Ein Umsetzen von Daten kann generell eine Änderung des zur Übertragung verwendeten Protokolls bedeuten, die Daten können nach der Umsetzung also anders zusammengestellt und/oder mit anderen protokollspezifischen Daten übertragen werden. Es besteht auch die Möglichkeit, dass lediglich das physikalische Übertragungsprinzip verändert wird.

Die Erfindung betrifft weiterhin ein Verfahren zum Betrieb eines Antriebssystems, bei welchem eine Motorsteuerung über ein Motorkabel mit einer Motoreinheit verbunden wird, und eine Datenerfassungseinheit primäre Daten von einer oder mehreren Komponenten der Motoreinheit und sekundäre Daten von einem Peripheriegerät empfängt, die primären Daten mit den sekundären Daten fusioniert, die fusionierten Daten über das Motorkabel an die Motorsteuerung überträgt, Steuerungs- und Konfigurationsdaten von der Motorsteuerung über das Motorkabel empfängt und die Steuerungs- und Konfigurationsdaten selektiv an die eine oder die mehreren Komponenten der Motoreinheit und/oder an das Peripheriegerät überträgt.

Für das erfindungsgemäße Verfahren gelten die Ausführungen zu dem erfindungsgemäßen Antriebssystem entsprechend. Die gilt insbesondere hinsichtlich Vorteilen und Ausführungsformen.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: ein Blockdiagramm einer ersten Ausführungsform eines erfindungsgemäßen Antriebssystems und
- Fig. 2: ein Blockdiagramm einer zweiten Ausführungsform des erfindungsgemäßen Antriebssystems.

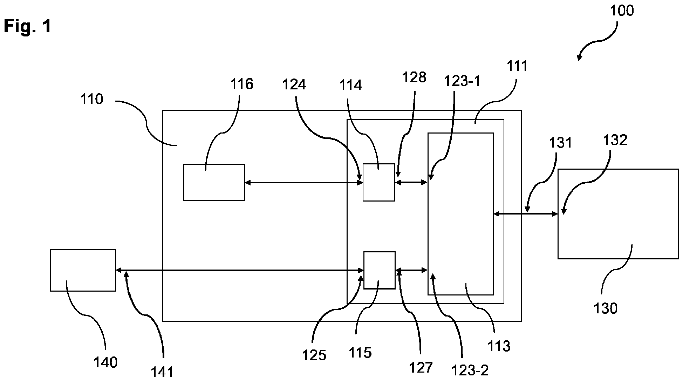

Fig. 1 zeigt schematisch ein Blockdiagramm einer ersten Ausführungsform eines erfindungsgemäßen Antriebssystems 100. Das Antriebssystem 100 umfasst eine Motoreinheit 110, eine Motorsteuerung 130 und ein Peripheriegerät 140. Die Motoreinheit 110 umfasst eine Datenerfassungseinheit 111, die ein Signalaufbereitungsmodul 113, ein Motordatenerfassungsmodul 114 und ein Zusatzdatenerfassungsmodul 115 umfasst. Die Motoreinheit 110 umfasst ferner einen Positionssensor 116, der mit dem Motordatenerfassungsmodul 114 in kommunikativer Verbindung steht und primäre Daten in der Form von Positionsdaten der Motoreinheit 110 an einer Primärdatenschnittstelle 124 des Motordatenerfassungsmoduls 114 bereitstellt.

Das Peripheriegerät 140 steht über eine Leitungsverbindung 141 mit dem Zusatzdatenerfassungsmodul 115 in kommunikativer Verbindung. Das Peripheriegerät 140 stellt sekundäre Daten oder Zusatzdaten an einer Sekundärdatenschnittstelle 125 für das Zusatzdatenerfassungsmodul 115 bereit.

Das Motordatenerfassungsmodul 114 und das Zusatzdatenerfassungsmodul 115 setzen die primären Daten bzw. die sekundären Daten jeweils von einem I²C-Protokoll (I²C von engl.: inter-integrated circuit) in ein UART-Protokoll um (UART von engl.: universal asynchroneous receiver transmitter), welches für das Signalaufbereitungsmodul 113 geeignet ist. Die umgesetzten primären Daten, die von dem Positionssensor 116 stammen, werden über eine Motordatenschnittstelle 128 an das Signalaufbereitungsmodul 113 übertragen, während die umgesetzten sekundären Daten, die von dem Peripheriegerät 140 stammen, über eine Zusatzdatenschnittstelle 127 an das Signalaufbereitungsmodul 113 übertragen werden.

Das Signalaufbereitungsmodul 113 empfängt die umgesetzten primären Daten und die umgesetzten sekundären Daten an einer jeweiligen Eingangsschnittstelle 123-1, 123-2. Anschließend fusioniert das Signalaufbereitungsmodul 113 die umgesetzten primären Daten und die umgesetzten sekundären Daten, sodass das Signalaufbereitungsmodul 113 in der Lage ist, fusionierte Daten auszugeben.

Die Motoreinheit 110 ist über ein Motorkabel 131, das mit dem Signalverarbeitungsmodul 113 der Datenerfassungseinheit 111 in Verbindung steht, mit der Motorsteuerung 130 verbunden. Das Signalaufbereitungsmodul 113 sendet die fusionierten Daten über eine HDSL-Leitung, die in das Motorkabel 131 eingebunden ist, an die Motorsteuerung 130. Der Begriff HDSL steht für "HIPERFACE DSL", und die HDSL-Leitung bezeichnet eine DSL-artige Leitung des HIPERFACE-Systems der Sick AG. Die HDSL-Leitung ist also ein Eigenname, der auf einer DSLähnlichen Übertragungstechnik mit einer Vielzahl von Trägerfrequenzen beruht. Eine DSL-Leitung (digital subscriber line) ist beispielsweise ebenso ausgebildet, Daten unter Verwendung einer Vielzahl von Trägerfrequenzen zu übertragen. Die Motorsteuerung weist wiederum eine Empfangsschnittstelle 132 auf, an der die fusionierten Daten empfangen werden, um aus diesen die Motordaten und die Zusatzdaten zu extrahieren und anschließend ausgeben zu können.

Die vorstehend beschriebene Datenübertragung verläuft von dem Motorsensor 116 und von dem Peripheriegerät 140 ausschließlich in Richtung der Motorsteuerung 130, wobei letztlich die primären Daten der Motoreinheit 110, d. h. des Positionssensors 116, und die sekundären Daten des Peripheriegeräts 140 an die Motorsteuerung 130 übertragen werden. Das Antriebssystem 100 ist jedoch für eine bidirektionale Datenübertragung vorgesehen, wie dies durch die Doppelpfeile zwischen den Modulen in Fig. 1 veranschaulicht ist.

Konkret empfängt die Datenerfassungseinheit 111 bzw. dessen Signalaufbereitungsmodul 113 Steuerungs- und Konfigurationsdaten von der Motorsteuerung 130 über das Motorkabel 131. Das Signalaufbereitungsmodul 113 setzt die Steuerungs- und Konfigurationsdaten von dem HDSL-Protokoll in das UART-Protokoll um und überträgt die umgesetzten Steuerungs- und Konfigurationsdaten jeweils selektiv an das Motordatenerfassungsmodul 114 und das Zusatzdatenerfassungsmodul 115, welche die jeweiligen Steuerungs- und Konfigurationsdaten an den Motorsensor 116 der Motoreinheit 110 bzw. an das Peripheriegerät 140 übertragen.

Da somit Steuerungs- und Konfigurationsdaten von der Motorsteuerung 130 sowohl zu dem Positionssensor 116 als auch zu dem Peripheriegerät 140 übertragen werden, ist es möglich, komplexe Peripheriegeräte 140 in das Antriebssystem 100 einzubinden, die eine Kommunikation bzw. Wechselwirkung mit der Motorsteuerung 130 in der Form eines gegenseitigen Datenaustauschs erfordern und die Steuerungs- und Konfigurationsdaten von der Motorsteuerung 130 für ihren Betrieb benötigen. Die Motorsteuerung 130 sendet ferner ein Signal zur Abfrage spezifischer Daten zunächst an die Datenerfassungseinheit 111, die dieses Signal an das Peripheriegerät 140 sendet und die abgefragten spezifischen Daten empfängt, um diese anschließend zu verarbeiten und in einer geeigneten Form an die Motorsteuerung 130 zu übertragen.

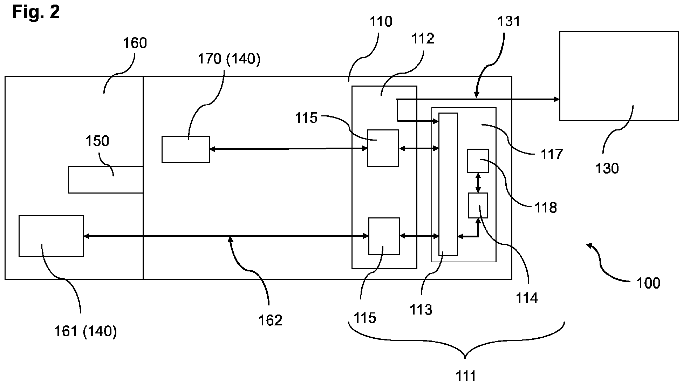

In Fig. 2 ist eine zweite Ausführungsform des Antriebssystems 100 als schematisches Blockdiagramm dargestellt. In Fig. 1 und 2 bezeichnen gleiche Bezugszeichen generell gleiche Komponenten und Elemente des Antriebssystems 100, sodass die vorstehende Beschreibung der Elemente und Komponenten der ersten Ausführungsform von Fig. 1 auch für die zweite Ausführungsform von Fig. 2 gültig ist.

Das Antriebssystem 100 umfasst in der Ausführungsform von Fig. 2 neben der Motoreinheit 110, die als Servomotor ausgebildet ist, und der Motorsteuerung 130 zusätzlich eine Getriebeeinheit 160, die als Servogetriebe ausgebildet ist. Die Motoreinheit 110 und die Getriebeeinheit 160 sind mechanisch miteinander verbunden, sodass eine Antriebswelle 150 der Motoreinheit 110 mit der Getriebeeinheit 160 in Verbindung steht. Die Getriebeeinheit 160 weist einen Getriebesensor 161 auf, der einem Peripheriegerät 140 gemäß der Ausführungsform von Fig. 1 entspricht. Der Getriebesensor 161 ist über eine Leitungsverbindung 162 mit einem Zusatzdatenerfassungsmodul 115 verbunden.

Die zweite Ausführungsform des Antriebssystems 100, die in Fig. 2 dargestellt ist, umfasst ferner zusätzlich ein weiteres Peripheriegerät 140, das als Temperatursensor 170 ausgebildet ist. Daher umfasst die Datenerfassungseinheit 111 ein zweites Zusatzdatenerfassungsmodul 115. Ferner sind die zwei Zusatzdatenerfassungsmodule 115 in ein gemeinsames Erfassungsmodul 112 integriert, das auch als Sensorhub 112 bezeichnet wird.

Die in Fig. 2 dargestellte zweite Ausführungsform des Antriebssystems 100 unterscheidet sich ferner dadurch von der in Fig. 1 dargestellten ersten Ausführungsform, dass das Signalaufbereitungsmodul 113 in einen Encoder 117 integriert ist.

Der Encoder 117 erfasst die Drehposition und/oder die Drehgeschwindigkeit des Servomotors als primäre Daten mittels eines Encoder-Erfassungsmoduls 118. Anschließend erfolgt mittels des Motordatenerfassungsmodul 114 die vorstehend beschriebene Umsetzung der primären Daten für das Signalaufbereitungsmodul 113.

Da das Signalaufbereitungsmodul 113 in den Encoder 117 integriert ist, umfassen die von dem Encoder 117 erfassten Daten somit sowohl die primären Daten als auch die sekundären Daten, die von den beiden Zusatzdatenerfassungsmodulen 115 bereitgestellt werden. Zusätzlich führt das in den Encoder integrierte Signalaufbereitungsmodul 113 die vorstehend beschriebenen Funktionen aus, d. h. die Fusion der primären und sekundären Daten und die Übertragung der fusionierten Daten über das Motorkabel 131 an die Motorsteuerung 130.

Das Signalaufbereitungsmodul 113 bzw. der Encoder 117 ist ferner über den Sensorhub 112 und das Motorkabel 131 an die Motorsteuerung 130 angeschlossen. Eine Modifikation der fusionierten Daten, die von dem Signalaufbereitungsmodul 113 bereitgestellt werden, findet jedoch im Sensorhub 112 nicht statt. Die Datenerfassungseinheit 111 umfasst in der in Fig. 2 dargestellten zweiten Ausführungsform des Antriebssystems 100 ferner auch die im Zusammenhang mit Fig. 1 beschriebenen Schnittstellen 123-1 bis 128, die der Übersichtlichkeit halber in Fig. 2 nicht explizit dargestellt sind. Das Gleiche gilt auch für die Empfangsschnittstelle 132 der Motorsteuerung 130.

Die in Fig. 2 dargestellte zweite Ausführungsform des Antriebssystems 100 gestattet ähnlich wie die erste Ausführungsform von Fig. 1 eine bidirektionale Kommunikation zwischen der Motorsteuerung 130 und den beiden Peripheriegeräten 140, d. h. dem Getriebesensor 161 und dem Temperatursensor 170. Für den Getriebesensor 161 werden folglich die in der Motoreinheit 110 bereits vorhandenen elektrischen und elektronischen Komponenten der Datenerfassungseinheit 111 genutzt, um den Getriebesensor 161 mit der Motorsteuerung 130 zu verbinden und die vorstehend beschriebene Kommunikation zwischen der Motorsteuerung 130 und dem Getriebesensor 161 zu ermöglichen. Gleiches gilt für den Temperatursensor 170. Dadurch ist der Aufwand bei der Verkabelung des Antriebssystems 100 von Fig. 2 geringer als bei einem vergleichbaren System, bei dem der Getriebesensor 161 einen separaten Anschluss, beispielsweise an ein Bussystem, benötigt.

### Bezugszeichenliste

- 100: Antriebssystem
- 110: Motoreinheit
- 111: Datenerfassungseinheit
- 112: gemeinsames Erfassungsmodul, Sensorhub
- 113: Signalaufbereitungsmodul
- 114: Motordatenerfassungsmodul
- 115: Zusatzdatenerfassungsmodul
- 116: Positionssensor
- 117: Encoder
- 118: Encoder-Erfassungsmodul
- 123-1: Eingangsschnittstelle
- 123-2: Eingangsschnittstelle
- 124: Primärdatenschnittstelle
- 125: Sekundärdatenschnittstelle
- 127: Zusatzdatenschnittstelle
- 128: Motordatenschnittstelle
- 130: Motorsteuerung
- 131: Motorkabel
- 132: Empfangsschnittstelle
- 140: Peripheriegerät
- 141: Leitungsverbindung
- 150: Antriebswelle
- 160: Getriebeeinheit
- 161: Getriebesensor
- 162: Leitungsverbindung
- 170: Temperatursensor

## Patentansprüche

1. Antriebssystem (100), umfassend:
eine Motoreinheit (110), die eine Datenerfassungseinheit (111) aufweist,
eine Motorsteuerung (130), die über ein Motorkabel (131) mit der Motoreinheit (110) verbunden ist, und
zumindest ein Peripheriegerät (140),
wobei die Datenerfassungseinheit (111) ausgebildet ist:
primäre Daten von einer oder mehreren Komponenten (116, 118) der Motoreinheit (110) und sekundäre Daten von dem zumindest einen Peripheriegerät (140) zu empfangen,
die primären Daten mit den sekundären Daten zu fusionieren,
die fusionierten Daten über das Motorkabel (131) zu der Motorsteuerung (130) zu übertragen,
Steuerungs- und Konfigurationsdaten von der Motorsteuerung (130) über das Motorkabel (131) zu empfangen und
die Steuerungs- und Konfigurationsdaten selektiv an die eine oder die mehreren Komponenten (116, 118) der Motoreinheit (110) und/oder an das zumindest eine Peripheriegerät (140) zu übertragen,
wobei das Antriebssystem (100) zumindest zwei Peripheriegeräte (140) umfasst,
**dadurch gekennzeichnet, dass**
die Datenerfassungseinheit (111) ausgebildet ist, sekundäre Daten zwischen den zumindest zwei Peripheriegeräten (140) zu übertragen.

2. Antriebssystem (100) nach Anspruch 1,
**dadurch gekennzeichnet, dass**
die Datenerfassungseinheit (111) ausgebildet ist, die Steuerungs- und Konfigurationsdaten zu verwenden, um eine Konfiguration der Motoreinheit (110) und/oder des Peripheriegeräts (140) durchzuführen.

3. Antriebssystem (100) nach Anspruch 1 oder 2,
**dadurch gekennzeichnet, dass**
die Datenerfassungseinheit (111) ausgebildet ist, ein Signal zur Abfrage spezifischer Daten an das Peripheriegerät (140) zu senden, die abgefragten spezifischen Daten zu empfangen und für eine Übertragung an die Motorsteuerung (130) zu verarbeiten.

4. Antriebssystem (100) nach einem der vorstehenden Ansprüche,
**dadurch gekennzeichnet, dass**
die Datenerfassungseinheit (111) ein Motordatenerfassungsmodul (114), ein Zusatzdatenerfassungsmodul (115) und ein Signalaufbereitungsmodul (113) umfasst,
das Motordatenerfassungsmodul (114) ausgebildet ist, die primären Daten an einer Primärdatenschnittstelle (124) zu empfangen, für das Signalaufbereitungsmodul (113) umzusetzen und über eine Motordatenschnittstelle (128) an das Signalaufbereitungsmodul (113) zu übertragen,
das Zusatzdatenerfassungsmodul (115) ausgebildet ist, die sekundären Daten an einer Sekundärdatenschnittstelle (125) zu empfangen, für das Signalaufbereitungsmodul (113) umzusetzen und über eine Zusatzdatenschnittstelle (127) an das Signalaufbereitungsmodul (113) zu übertragen.

5. Antriebssystem (100) nach Anspruch 4,
**dadurch gekennzeichnet, dass**
das Motordatenerfassungsmodul (114) und das Zusatzdatenerfassungsmodul (115) als ein gemeinsames Erfassungsmodul (112) ausgebildet sind.

6. Antriebssystem (100) nach Anspruch 4,
**dadurch gekennzeichnet, dass**
das Motordatenerfassungsmodul (114) und das Zusatzdatenerfassungsmodul (115) als separate Einheiten ausgebildet sind.

7. Antriebssystem (100) nach einem der vorstehenden Ansprüche,
**dadurch gekennzeichnet, dass**
die Datenerfassungseinheit (111) ausgebildet ist, die sekundären Daten der zumindest zwei Peripheriegeräte (140) basierend aufeinander oder zur gleichen Zeit zu erfassen.

8. Antriebssystem (100) nach einem der vorstehenden Ansprüche,
**dadurch gekennzeichnet, dass**
das Peripheriegerät (140) in die Datenerfassungseinheit (111) integriert ist.

9. Antriebssystem (100) nach einem der vorstehenden Ansprüche,
**dadurch gekennzeichnet, dass**
die Motoreinheit (110) einen Servomotor mit einem Encoder (117) umfasst, die primären Daten eine Drehposition und/oder eine Drehgeschwindigkeit des Servomotors umfassen,
das Peripheriegerät (140) ein Getriebesensor (161) ist und
die sekundären Daten getriebespezifische Daten umfassen.

10. Antriebssystem (100) nach Anspruch 9,
**dadurch gekennzeichnet, dass**
ein Signalaufbereitungsmodul (113) der Datenerfassungseinheit (111) in den Encoder (117) eingebunden ist und von dem Encoder (117) erfasste Daten die primären Daten umfassen.

11. Verfahren zum Betrieb eines Antriebssystems (100), bei welchem:
eine Motorsteuerung (130) über ein Motorkabel (131) mit einer Motoreinheit (110) verbunden wird,
eine Datenerfassungseinheit (111) primäre Daten von einer oder mehreren Komponenten (116, 118) der Motoreinheit (110) und sekundäre Daten von zumindest einem Peripheriegerät (140) empfängt, die primären Daten mit den sekundären Daten fusioniert, die fusionierten Daten über das Motorkabel (131) an die Motorsteuerung (130) überträgt, Steuerungs- und Konfigurationsdaten von der Motorsteuerung (130) über das Motorkabel (131) empfängt und die Steuerungs- und Konfigurationsdaten selektiv an die eine oder die mehreren Komponenten (116, 118) der Motoreinheit (110) und/oder an das zumindest eine Peripheriegerät (140) überträgt
wobei das Antriebssystem (100) zumindest zwei Peripheriegeräte (140) umfasst,
**dadurch gekennzeichnet, dass**
die Datenerfassungseinheit (111) sekundäre Daten zwischen den zumindest zwei Peripheriegeräten (140) überträgt.

## Claims

1. A drive system (100) comprising:
a motor unit (110) which has a data acquisition unit (111),
a motor control (130) which is connected to the motor unit (110) via a motor cable (131), and
at least one peripheral device (140),
wherein the data acquisition unit (111) is configured:
to receive primary data from one or more components (116, 118) of the motor unit (110) and secondary data from the at least one peripheral device (140),
to fuse the primary data with the secondary data,
to transmit the fused data to the motor control (130) via the motor cable (131),
to receive control and configuration data from the motor control (130) via the motor cable (131), and
to selectively transmit the control and configuration data to the one or more components (116, 118) of the motor unit (110) and/or to the at least one peripheral device (140),
wherein the drive system (100) comprises at least two peripheral devices (140),
**characterized in that**
the data acquisition unit (111) is configured to transmit secondary data between the at least two peripheral devices (140).

2. A drive system (100) according to claim 1,
**characterized in that**
the data acquisition unit (111) is configured to use the control and configuration data to perform a configuration of the motor unit (110) and/or the peripheral device (140).

3. A drive system (100) according to claim 1 or 2,
**characterized in that**
the data acquisition unit (111) is configured to send a signal for querying specific data to the peripheral device (140), to receive the queried specific data and to process said data for a transmission to the motor control (130).

4. A drive system (100) according to any one of the preceding claims, **characterized in that**
the data acquisition unit (111) comprises a motor data acquisition module (114), an additional data acquisition module (115) and a signal processing module (113),
the motor data acquisition module (114) is configured to receive the primary data at a primary data interface (124), to convert the primary data for the signal processing module (113) and to transmit said primary data to the signal processing module (113) via a motor data interface (128),
the additional data acquisition module (115) is configured to receive the secondary data at a secondary data interface (125), to convert the secondary data for the signal processing module (113) and to transmit said secondary data to the signal processing module (113) via an additional data interface (127).

5. A drive system (100) according to claim 4,
**characterized in that**
the motor data acquisition module (114) and the additional data acquisition module (115) are formed as a common acquisition module (112).

6. A drive system (100) according to claim 4,
**characterized in that**
the motor data acquisition module (114) and the additional data acquisition module (115) are formed as separate units.

7. A drive system (100) according to any one of the preceding claims, **characterized in that**
the data acquisition unit (111) is configured to acquire the secondary data of the at least two peripheral devices (140) based on one another or at the same time.

8. A drive system (100) according to any one of the preceding claims, **characterized in that**
the peripheral device (140) is integrated into the data acquisition unit (111).

9. A drive system (100) according to any one of the preceding claims, **characterized in that**
the motor unit (110) comprises a servomotor having an encoder (117),
the primary data comprise a rotational position and/or a rotational speed of the servomotor,
the peripheral device (140) is a gear sensor (161), and
the secondary data comprise gear-specific data.

10. A drive system (100) according to claim 9,
**characterized in that**
a signal processing module (113) of the data acquisition unit (111) is incorporated into the encoder (117) and data acquired by the encoder (117) comprise the primary data.

11. A method of operating a drive system (100) in which:
a motor control (130) is connected to a motor unit (110) via a motor cable (131),
a data acquisition unit (111) receives primary data from one or more components (116, 118) of the motor unit (110) and secondary data from at least one peripheral device (140), fuses the primary data with the secondary data, transmits the fused data to the motor control (130) via the motor cable (131), receives control and configuration data from the motor control (130) via the motor cable (131), and selectively transmits the control and
configuration data to the one or more components (116, 118) of the motor unit (110) and/or to the at least one peripheral device (140),
wherein the drive system (100) comprises at least peripheral devices (140),
**characterized in that**
the data acquisition unit (111) transmits secondary data between the at least two peripheral devices (140).

## Revendications

1. Système d'entraînement (100), comprenant :
une unité de moteur (110) présentant une unité d'acquisition de données (111),
une commande de moteur (130) reliée à l'unité de moteur (110) par un câble de moteur (131), et
au moins un appareil périphérique (140),
dans lequel
l'unité d'acquisition de données (111) est conçue pour :
recevoir des données primaires d'un ou plusieurs composants (116, 118) de l'unité de moteur (110) et des données secondaires dudit au moins un appareil périphérique (140),
fusionner les données primaires avec les données secondaires,
transmettre les données fusionnées à la commande de moteur (130) via le câble de moteur (131),
recevoir des données de commande et de configuration de la commande de moteur (130) via le câble de moteur (131), et
transmettre sélectivement les données de commande et de configuration audit ou auxdits plusieurs composants (116, 118) de l'unité de moteur (110) et/ou audit au moins un appareil périphérique (140),
le système d'entraînement (100) comprend au moins deux appareils périphériques (140),
**caractérisé en ce que**
l'unité d'acquisition de données (111) est conçue pour transmettre des données secondaires entre lesdits au moins deux appareils périphériques (140).

2. Système d'entraînement (100) selon la revendication 1,
**caractérisé en ce que**
l'unité d'acquisition de données (111) est conçue pour utiliser les données de commande et de configuration afin d'effectuer une configuration de l'unité de moteur (110) et/ou de l'appareil périphérique (140).

3. Système d'entraînement (100) selon la revendication 1 ou 2,
**caractérisé en ce que**
l'unité d'acquisition de données (111) est conçue pour envoyer à l'appareil périphérique (140) un signal d'interrogation de données spécifiques, pour recevoir les données spécifiques interrogées et pour les traiter en vue d'une transmission à la commande de moteur (130).

4. Système d'entraînement (100) selon l'une des revendications précédentes, **caractérisé en ce que**
l'unité d'acquisition de données (111) comprend un module d'acquisition de données de moteur (114), un module d'acquisition de données supplémentaires (115) et un module de traitement de signaux (113),
le module d'acquisition de données de moteur (114) est conçu pour recevoir les données primaires au niveau d'une interface de données primaires (124), pour les convertir pour le module de traitement de signaux (113) et pour les transmettre au module de traitement de signaux (113) via une interface de données de moteur (128),
le module d'acquisition de données supplémentaires (115) est conçu pour recevoir les données secondaires au niveau d'une interface de données secondaires (125), pour les convertir pour le module de traitement de signaux (113) et pour les transmettre au module de traitement de signaux (113) via une interface de données supplémentaires (127).

5. Système d'entraînement (100) selon la revendication 4,
**caractérisé en ce que**
le module d'acquisition de données du moteur (114) et le module d'acquisition de données supplémentaires (115) sont conçus comme un module d'acquisition commun (112).

6. Système d'entraînement (100) selon la revendication 4,
**caractérisé en ce que**
le module d'acquisition de données de moteur (114) et le module d'acquisition de données supplémentaires (115) sont conçus comme des unités séparées.

7. Système d'entraînement (100) selon l'une des revendications précédentes, **caractérisé en ce que**
l'unité d'acquisition de données (111) est conçue pour acquérir les données secondaires desdits au moins deux appareils périphériques (140) successivement ou en même temps.

8. Système d'entraînement (100) selon l'une des revendications précédentes, **caractérisé en ce que**
l'appareil périphérique (140) est intégré dans l'unité d'acquisition de données (111).

9. Système d'entraînement (100) selon l'une des revendications précédentes, **caractérisé en ce que**
l'unité de moteur (110) comprend un servomoteur avec un encodeur (117), les données primaires incluent une position de rotation et/ou une vitesse de rotation du servomoteur,
l'appareil périphérique (140) est un capteur de mécanisme de transmission (161), et
les données secondaires incluent des données spécifiques au mécanisme de transmission.

10. Système d'entraînement (100) selon la revendication 9,
**caractérisé en ce que**
un module de traitement de signaux (113) de l'unité d'acquisition de données (111) est intégré dans l'encodeur (117), et les données acquises de l'encodeur (117) incluent les données primaires.

11. Procédé de fonctionnement d'un système d'entraînement (100), dans lequel :
une commande de moteur (130) est reliée à une unité de moteur (110) via un câble de moteur (131),
une unité d'acquisition de données (111) reçoit des données primaires d'un ou plusieurs composants (116, 118) de l'unité de moteur (110) et des données secondaires d'au moins un appareil périphérique (140), fusionne les données primaires avec les données secondaires, transmet les données fusionnées à la commande de moteur (130) via le câble de moteur (131), reçoit des données de commande et de configuration de la commande de moteur (130) via le câble de moteur (131) et transmet sélectivement les données de commande et de configuration audit ou auxdits plusieurs composants (116, 118) de l'unité de moteur (110) et/ou audit au moins un appareil périphérique (140),
le système d'entraînement (100) comprend au moins deux appareils périphériques (140),
**caractérisé en ce que**
l'unité d'acquisition de données (111) transmet des données secondaires entre lesdits au moins deux appareils périphériques (140).
